# EUROPEAN PATENT SPECIFICATION

(11) **EP 4 688 182 B1**
(45) Date of publication and mention of the grant of the patent: **09.12.2026**
(21) Application number: 24723202.8
(22) Date of filing: 02.04.2024
(51) Int. Cl.: A63D 15/00, A63D 15/20

(54) **CUE SPORTS GAME SYSTEM AND METHOD**
HINWEISSPORTSPIELSYSTEM UND -VERFAHREN
SYSTÈME ET PROCÉDÉ DE JEU DE BILLARD

(30) Priority: 31.03.2023 GB 202304803
(43) Date of publication of application: 11.02.2026
(73) Proprietor: World Pool Systems Ltd, Northwood, Middlesex HA6 2NT (GB)
(72) Inventor: JOLLIFFE, David, Middlesex HA6 2NT (GB); JOLLIFFE, Steven, Middlesex HA6 2NT (GB); LEE, Mark, Middlesex HA6 2NT (GB); MILLER, Mark, Middlesex HA6 2NT (GB)
(74) Representative: Williams Powell
(86) International application number: PCT/GB2024/050897
(87) International publication number: WO 2024/201084

(56) References cited:
- WO-A1-2019/219075
- CN-A- 102 327 697
- KR-A- 20210 037 381
- KR-B1- 102 317 914
- KR-B1- 102 480 941
- US-A- 4 882 676
- US-A1- 2011 053 688

## Description

### Field of the Invention

The present invention relates to a cue sports game system and method that are particularly applicable to pool, billiards and snooker cue sports games.

### Background to the Invention

Cue sports games such as pool, billiards and snooker date back many hundreds of years and are a popular pastime. The games are typically played by two (or more) players. Each player takes turns to take a shot by using a cue stick to strike game balls and to propel them into holes, known as pockets, positioned at the corners and along the long sides of a rectangular game table. The act of putting a ball into a hole is known as "potting". The various games generally differ in terms of ball coloring and this in turn is connected to the different rule sets that determine scoring and the winner. In some versions of the game, a cue ball (often a solid while color) must be hit by the cue stick and propelled into the other balls. The other balls can have varying designs and colors and are referred to here as objective balls because typically it is the player's objective to pot these balls while keeping the cue ball in play. In many versions of the game, potting the cue ball results in a foul shot that gives a negative score, irrespective of what other objective balls are potted.

One of the existing problems with cue sports is that it can be surprisingly difficult to keep score. It is not obvious which balls have been potted, or whose turn it is (if there are more than 2 players), or in the case of pool where order of potting matters, what ball needs to be potted (e.g. "am I on spots or stripes" or "what number is next"?).

On a traditional set of American pool balls, every ball has a number which lends itself to many different points-based scoring games. However, adding up the numbers is often impossible as it is often not known which balls have just been potted. The numbers are difficult to see, as they are often obscured by other balls/cushions and even if you can see the numbers, the math involved, whilst simple, is beyond many players or is undesirable for social games at the local bar or pub. For these reasons, points scoring games are rarely played, although the games are potentially more entertaining than just potting 1-9 in order (for example). US2011/053688 discloses an entertainment system providing dynamically augmented game surfaces for interactive fun and learning.

Another problem with cue sports games is that potting balls is quite difficult, and the best player will probably win almost every time. This means that beginners will soon lose interest and will not get much pleasure or satisfaction from the game. The worst players spend most of the time not being 'in the game' and just end up watching the more proficient players pot ball after ball, which can be frustrating. While there exist handicap systems that attempt to balance players of different skill levels, they generally do so by modifying the win condition of the game which can also cause frustration as it may not be clear who is winning during the game, and it does not really encourage either weak or strong players.

### Statement of Invention

According to an aspect of the present invention, there is provided a cue sports game system comprising a table having a playing surface and a plurality of pockets, a projector, a camera system and a data processing system, the camera system being positioned to have a field of view of the playing surface and of play activity of a cue sports game with a plurality of game balls on the playing surface and the projector being positioned overhead of the playing surface to project imagery onto the playing surface, the plurality of game balls including a cue ball and a plurality of objective balls,
the camera system configured to capture a video data stream of play activity at the table and communicate the video data stream to the data processing system;
the data processing system being configured to identify, from the video data stream, identity and positioning of each of the game balls on the playing surface over time, the data processing system being further configured to:
   determine available shots from the identity and positioning of the game balls, an available shot comprising the cue ball hitting one of the objective balls and causing the respective objective ball to enter one of the pockets;
   for each available shot, determine a plurality of geometrical measurements on relative position of the cue ball, the respective objective ball and the pocket and calculate a difficulty score from the geometrical measurements;
   in at least one or more predetermined phases of the game, select, in dependence on the respective difficulty score, one or more of the available shots to be penalized or incentivized and cause the projector to project a penalty or incentive virtual play object onto the playing surface in a path of the cue ball or the objective ball;
   determine, after a shot, from the video data stream, identity and positioning of the game balls, a score for the shot in dependence on the position of the game balls and in dependence on the cue ball or an objective ball passing over or into a virtual play object during the shot.

The cue sports game system may further include a data repository, the data processing system being configured to maintain, in the data repository, a player turn schedule for shots and an overall score for each player dependent on the score for each shot taken in their respective turn.

The data processing system may be configured to determine a differential of overall score of the player having the turn relative to overall score of the other players and select the one or more of the available shots to be penalized or incentivized dependent on the differential.

The data processing system may be configured to vary a number available of shots to be incentivized or penalized based on the differential.

The data processing system may be configured, based on the differential, to vary a position of virtual play objects to thereby vary achievability of incurring the penalty or incentive.

The cue sports game system may further comprise a machine learning system having a predictive model trained on training data from shots taken against available shots, the training data including the geometrical measurements and outcome of the shot, wherein the predictive model is configured to determine the difficulty score for the shot, the data processing system being configured to communicate the geometrical measurements of each available shot to the machine learning system and to obtain the difficulty score therefrom.

The data processing system may be configured to provide the geometrical measurements and outcome of shots to the machine learning system to train the predictive model on real-time data.

The cue sports game system may further comprise a player analysis system, wherein the data processing system is configured to provide the video data stream and/or data derived therefrom to the player analysis system, the player analysis system being configured to determine a player weighting from the provided data, wherein the data processing system is configured to modify the difficulty score of an available shot in dependence on the player weighting.

The player analysis system may include a predictive machine learning model trained in real time from the provided data.

The cue sports game system may further comprise a lookup table stored in a memory, the lookup table dividing each geometrical measurement into a number of bands of values for the geometrical measurement, the lookup table mapping each band to a difficulty value, the data processing system being configured to classify each geometrical measurement according to its respective band and obtain its respective difficulty value, the data processing system being further configured to calculate the difficulty score for the available shot by summing the difficulty value for each geometrical measurement of the available shot.

The data processing system may be configured to calculate the difficulty score from an arithmetic calculation, arithmetic calculation including parameters comprising, or being derived from, the geometrical measurements.

The camera system may comprise a plurality of cameras having overlapping fields of view of the playing surface, the data processing system being configured to determine positioning of the game balls from the video data streams of the cameras using predetermined data on the cameras and their position relative to the playing surface.

According to another aspect of the present invention, there is provided a computer implemented method for a cue sports game system, the cue sports game system comprising a table having a playing surface and a plurality of pockets, a projector, a camera system and a data processing system, the camera system being positioned to have a field of view of the playing surface and of play activity of a cue sports game with a plurality of game balls on the playing surface and the projector being positioned overhead of the playing surface to project imagery onto the playing surface, the plurality of game balls including a cue ball and a plurality of objective balls, the camera system configured to capture a video data stream of play activity at the table and communicate the video data stream to the data processing system, wherein the computer implemented method comprising:
identifying, by the data processing system, from the video data stream, identity and positioning of each of the game balls on the playing surface over time;
determining available shots from the identity and positioning of the game balls, an available shot comprising the cue ball hitting one of the objective balls and causing the respective objective ball to enter one of the pockets;
for each available shot, determining a plurality of geometrical measurements on relative position of the cue ball, the respective objective ball and the pocket and calculate a difficulty score from the geometrical measurements;
in at least one or more predetermined phases of the game, selecting, in dependence on the respective difficulty score, one or more of the available shots to be penalized or incentivized and cause the projector to project a penalty or incentive virtual play object onto the playing surface in a path of the cue ball or the objective ball; and,
determining, after a shot, from the video data stream, identity and positioning of the game balls, a score for the shot in dependence on the position of the game balls and in dependence on the cue ball or an objective ball passing over or into a virtual play object during the shot.

The computer implemented method may further comprise maintaining, in a data repository, a player turn schedule for shots and an overall score for each player dependent on the score for each shot taken in their respective turn.

The computer implemented method may further comprise determining a differential of overall score of the player having the turn relative to overall score of the other players and selecting the one or more of the available shots to be penalized or incentivized dependent on the differential.

The computer implemented method may further comprise varying a number available of shots to be incentivized or penalized based on the differential.

The computer implemented method may further comprise varying, based on the differential, a position of virtual play objects to thereby vary achievability of incurring the penalty or incentive.

The computer implemented method may further comprise communicating with a machine learning system having a predictive model trained on training data from shots taken against available shots, the training data including the geometrical measurements and outcome of the shot, wherein the predictive model is configured to determine at least a part of the difficulty score for the shot, the communicating including communicating the geometrical measurements of each available shot to the machine learning system and to obtain the difficulty score therefrom.

The computer implemented method may further comprise providing the geometrical measurements and outcome of shots to the machine learning system to train the predictive model on real-time data.

The computer implemented method may further comprise providing the video data stream and/or data derived therefrom to a player analysis system, the player analysis system determining a player weighting from the provided data, the computer implemented method further comprising modifying the difficulty score of an available shot in dependence on the player weighting.

The player analysis system may include a predictive machine learning model, the computer implemented method may further comprise training the model of the player analysis system in real time from the provided data.

The computer implemented method may further comprise storing a lookup table in a memory, the lookup table dividing each geometrical measurement into a number of bands of values for the geometrical measurement, the lookup table mapping each band to a difficulty value, the computer implemented method further comprising classifying at least selected ones of the each geometrical measurement according to its respective band and obtain its respective difficulty value, and calculating at least a part of the difficulty score for the available shot by summing the difficulty value for each geometrical measurement of the available shot.

The computer implemented method may further comprise calculating at least a part of the difficulty score from an arithmetic calculation, arithmetic calculation including parameters comprising, or being derived from, the geometrical measurements.

According to another aspect of the present invention, there is provided a cue sports game system comprising a table having a playing surface and a plurality of pockets, a projector, a camera system and a data processing system, the camera system being positioned to have a field of view of the playing surface and of play activity of a cue sports game with a plurality of game balls on the playing surface and the projector being positioned overhead of the playing surface to project imagery onto the playing surface,
the camera system configured to capture a video data stream of play activity at the table and communicate the video data stream to the data processing system;
the data processing system being configured to identify, from the video data streams, identity and positioning of each of the game balls on the playing surface over time, the data processing system being further configured to:
   determine available shots from the identity and positioning of the game balls, an available shot comprising the cue striking one of the game balls resulting in a valid scoring shot, the valid scoring shot being defined in dependence on a rule set for the game, the rule set being stored in a memory accessible to the data repository;
   for each available shot, determine a plurality of geometrical measurements on relative position of the game ball to be struck by the cue and one or more of the other game balls or features of playing surface that result in the valid scoring shot and calculate a difficulty score from the geometrical measurements;
   in at least one or more predetermined phases of the game, select, in dependence on the respective difficulty score, one or more of the available shots to be penalized or incentivized and cause the projector to project a penalty or incentive virtual play object onto the playing surface in a path of the available shot;
   determine, after a shot, from the video data stream, identity and positioning of the game balls, a score for the shot in dependence on the position of the game balls, the rule set for the game and one or more of the game balls passing over or into the virtual play object during the shot.

The plurality of game balls may include a cue ball and a plurality of objective balls, an available shot comprising the cue ball hitting one of the objective balls and causing the respective objective ball to enter one of the pockets, wherein the data processing system is configured for each available shot, to determine a plurality of geometrical measurements on relative position of the cue ball, the respective objective ball and the pocket and calculate the difficulty score from the geometrical measurements.

According to another aspect of the present invention, there is provided a game system comprising a table having a playing surface, a projector, a camera system and a data processing system, the camera system being positioned to have a field of view of the playing surface and of play activity of a game with a plurality of game balls on the playing surface and the projector being positioned overhead of the playing surface to project imagery onto the playing surface,
the camera system configured to capture a video data stream of play activity at the table and communicate the video data stream to the data processing system;
the data processing system including a memory encoding rules of the game according to valid and invalid play activity with respect to the plurality of game balls, the data processing system being configured to identify, from the video data stream, identity and positioning of each of the game balls on the playing surface over time, the data processing system being further configured to:
   determine available shots from the identity and positioning of the game balls, an available shot comprising a shot that can be validly made according to the rules of the game;
   for each available shot, determine a plurality of geometrical measurements on relative position of the ball or balls comprising the available shot and calculate a difficulty score from the geometrical measurements;
   select, in dependence on the respective difficulty score, one or more of the available shots to be penalized or incentivized and cause the projector to project a penalty or incentive virtual play object onto the playing surface in a path of the available shot;
   determine, after a shot, from the video data stream, identity and positioning of the game balls, a score for the shot in dependence on the position of the game balls and in dependence on one of the game balls passing over or into a virtual play object during the shot.

In one embodiment, a cue game sports system comprises a table having a playing surface, a projector, a camera system and a data processing system, the camera system being positioned to have a field of view of the playing surface and players playing a cue sports game with a plurality of game balls at the table and the projector being positioned overhead of the playing surface to project imagery onto the playing surface or table edge,
the camera system configured to capture a video data stream of play activity of a player playing at the table and communicate the video data stream to the data processing system;
the data processing system being configured to identify, from the video data stream, actions of the player and events arising from the actions and generate, from the actions and events a skill rating for the player;
the projector being configured to project, onto the playing surface, one or more game elements modifying play of the cue sports game, the one or more game elements being determined in dependence on the skill rating for the player.

In another embodiment, a cue sports game system comprises a table having a playing surface, a projector, a camera system and a data processing system, the camera system being positioned to have a field of view of the playing surface and players playing a cue sports game with a plurality of game balls at the table and the projector being positioned overhead of the playing surface to project imagery onto the playing surface or table edge,
the camera system comprising a plurality of cameras having overlapping field of view of the playing surface, each camera being configured to capture a video data stream of play activity at the table and communicate the video data stream to the data processing system;
the data processing system being configured to correlate the video data streams from the cameras and identify, from the correlated video data streams, identity and positioning of each of the game balls over time, the data processing system being further configured to generate a score for the active player in dependence on positioning of the game balls and on a scoring criteria for the cue sports game.

In another embodiment, a cue sports game system comprises a table having a playing surface, a projector, a camera system and a data processing system, the camera system being positioned to have a field of view of the playing surface and players playing a cue sports game with a plurality of game balls at the table and the projector being positioned overhead of the playing surface to project imagery onto the playing surface or table edge,
the projector being configured to project imagery of a touch user interface onto the table edge;
the camera system being configured to capture a video data stream of play activity at the table and communicate the video data stream to the data processing system;
the data processing system being configured to determine, from the video data stream, a touch input by a player in respect of the touch user interface and to modify one or more aspects of the cue sports game in dependence on the determined touch input.

The cue sports game system can support many different game modes (including game modes that are new and/or differ from conventional rules) and not only can guide the players on the games and rules, but it can also provide real-time scoring. Preferably, embodiments of the present invention are configured to modify the game mode being played in dependence on the players so as to provide handicapping and an enjoyable and engaging experience for players. Other games can be similarly supported. Although the embodiments and claims are set out focusing on specific permutations, it will be appreciated that the various systems and features described are interchangeable and can be selected according to desired implementation.

### Brief Description of the Drawings

Embodiments of the present invention will now be described by way of example only and with reference to the accompanying drawings, in which:
Figure 1 is a schematic diagram of aspects of a cue sports game system according to an embodiment;
Figure 2 is a diagram of a playing surface 15 showing a game state and highlighting example factors and geometrical measurements that may be taken into account when calculating difficulty score in an embodiment;
Figure 3 is a schematic diagram of aspects of a cue sports game system according to an embodiment;
Figure 4 is a schematic diagram of aspects of a cue sports game system according to an embodiment; and,
Figure 5 is a schematic diagram of aspects of a cue sports game system according to an embodiment.

### Detailed Description

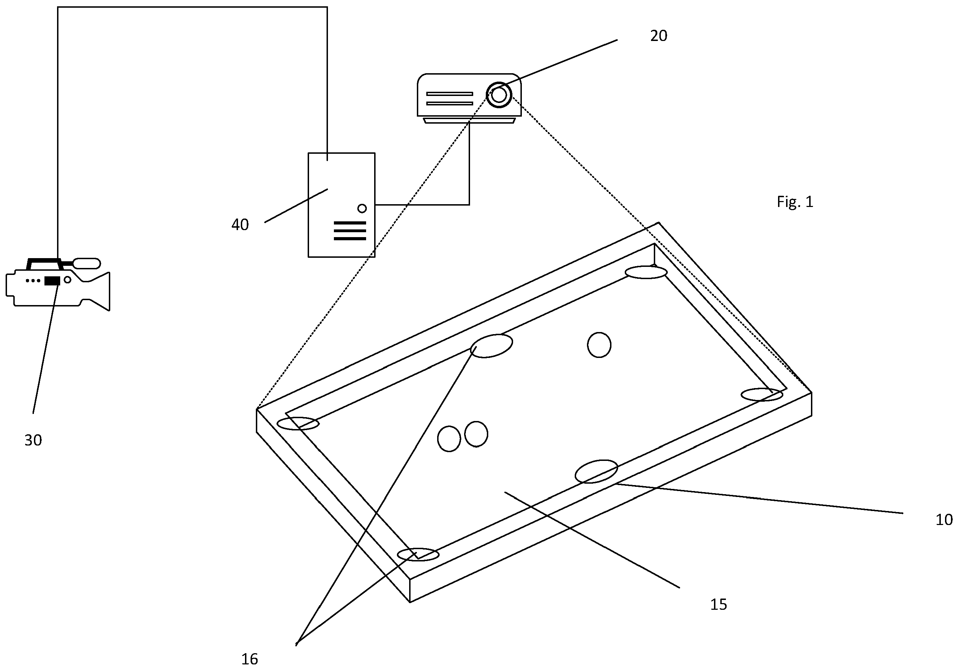

Figure 1 is a schematic diagram of a cue sports game system. The system includes a table 10 having a playing surface 15, a projector 20, a camera system 30 and a data processing system 40.

The table 10 has a playing surface 15 and a plurality of pockets 16. The camera system 30 is positioned to have a field of view of the playing surface and of play activity of a cue sports game with a plurality of game balls on the playing surface 15. The projector 20 is positioned overhead of the playing surface to project imagery onto the playing surface 15.

In one embodiment, the plurality of game balls include a cue ball and a plurality of objective balls. As this is the most popular variant of a standard game of pool or snooker, embodiments highlight differences and enhancements over this. However, it will be appreciated that the system and method could support new or existing game formats or rules. For example, there might be variants that do not have a dedicated cue ball or that give bonus scoring for also potting the cue ball.

The camera system 30 is configured to capture a video data stream of play activity at the table and communicate the video data stream to the data processing system 40.

The data processing system 40 is configured to identify, from the video data stream, identity and positioning of each of the game balls on the playing surface over time.

The data processing system is further configured to:
determine available shots from the identity and positioning of the game balls, an available shot comprising the cue ball hitting one of the objective balls and causing the respective objective ball to enter one of the pockets; and,
for each available shot, determine a plurality of geometrical measurements on relative position of the cue ball, the respective objective ball and the pocket and calculate a difficulty score from the geometrical measurements.

There are various ways in which the data processing system may calculate the difficulty score and also various different geometrical measurements and associated factors that may be taken into account and examples of these are set out below.

In at least one or more predetermined phases of the game, the data processing system 40 selects, in dependence on the respective difficulty score, one or more of the available shots to be penalized or incentivized and cause the projector to project a penalty or incentive virtual play object onto the playing surface in a path of the cue ball or the objective ball. Other factors may also be taken into account in this selection and examples of these are explained below. The inclusion of virtual play objects may be throughout the whole game, or it may be suppressed in certain phases, for example during the break.

The camera system is continually recording the video data stream and providing it to the data processing system 40. After a shot, the balls eventually come to a halt. The data processing system is configured, after it is determined a shot has been taken (optionally there might be a time-out or similar), to take into account the identity and positioning of the game balls and determine from that a score for the shot in dependence on the position of the cue and objective game balls. The video data stream of the shot (or a flag or other record that is created from the video data stream in substantially real time during the shot) is also checked and the score adjusted upon the cue ball or an objective ball passing over or into a virtual play object during the shot. Once the score is calculated, it is preferably announced, added to the active players score and then the turn is passed to the next player and the processes repeated until a win condition (typically a scoring threshold) is reached.

Preferably, the number of active virtual play objects and their values are closely linked to the players' score differential so that they penalize players with a large lead in order to slow them down, give a helping hand to players lagging behind on score, and bring players' scores closer together to make the game closer and more exciting.

Preferably, conventional cues and balls are used. However, these can be modified to augment the capabilities of the system.

The projector 20 and camera system 30 are preferably positioned above the playing surface of the table 10. They may be offset or directly overhead. The data processing system 40 is preferably directly connected to the projector 20 and camera system 30, although in some embodiments it may be remote or implemented in the form of a distributed system.

In one embodiment, the projector 20 and camera system 30 are mounted on a rig (not shown) and suspended by the rig above the playing surface.

Preferably, the camera system 30 includes at least two cameras mounted off-center of the playing surface with overlapping fields of view. Preferably, the projector is a laser projector and has a projection lens and throw (shown in dotted lines) selected such that imagery can be projected up to and including the edges of the table 10.

In operation, the camera system 30 is configured to capture video imagery of the playing surface and optionally of the active player. The video imagery is communicated to the data processing system which may process it in various ways, examples of which are explained below.

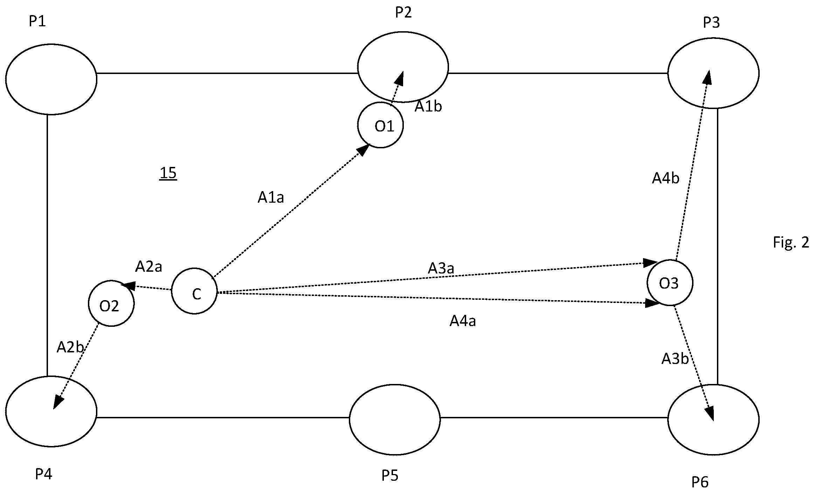

Figure 2 is a diagram of a playing surface 15 showing a game state and highlighting example factors and geometrical measurements that may be taken into account when calculating difficulty score in an embodiment. It should be noted that the example is simplified for the purposes of explanation and other factors can be taken into account.

To calculate the degree of difficulty of a shot, the data processing system calculates a score that corresponds to the chance of the player being able to make a successful pot, the 'Make Percentage'. Preferably, this assumes that the player is of average ability (for an expert player, the majority of shots would have a Make Percentage of >95%).

For example, if the cue ball is 0.3048m (1ft) from the objective ball and the objective ball is 0.3048m (1ft) from the center of a pocket, and the balls are exactly lined up straight, then the Make Percentage may be calculated as 100%.

If the distances changed from 0.3048m (1ft) to 0.6096m (2ft), then the Make Percentage may change to around 90%.

If the total shot distance was 3.048m (10ft) (diagonally across the table, 1.524m (5ft) to objective ball and 1.524m (5ft) to pocket, and straight) then the Make Percentage may be about 10% (depending on pocket size).

The size of the pocket available for the pot depends on the size of the pocket, the size of the ball, and the angle from which the ball enters the pocket. For example, if a middle pocket has an opening of 11.43cm (4.5 inches) and the ball is 5.715cm (2.25 inches) (standard US sizes) then there is a lot of margin for error. But if the ball is travelling towards the center of the middle pocket from a 45 degree angle, then the opening is effectively reduced from 11.43cm (4.5 inches) to about 8.89cm (3.5 inches) so the make percentage is reduced. If the angle is more acute, then the Make Percentage ends up at zero, as the opening of the middle pocket effectively becomes smaller than the ball.

For a normal pot, a key measurement is normally the distance between the cue ball and the objective ball. The longer that distance, the harder the pot, unless the object ball is very close to the pocket. The next key measurement is the distance from the object ball to the pocket, followed by the angle of the contact required. This angle only really adds to the degree of difficulty once the angle of contact is such that the cue ball is hitting near the extreme edge of the objective ball rather than near the center. As the contact required gets nearer the outer edge, the lower the Make Percentage, especially if the objective ball has a few feet to travel, meaning that the shot needs to have a lot of force to make the objective ball reach the pocket.

If there is no direct line to the pocket, ie the object ball has to bounce off a cushion to enter a pocket, then the Make Percentage may vary between 1 & 20% depending on the angles and distances involved. For example, hitting a ball off an end cushion into a pocket is much harder than hitting a ball off a side cushion, as the ball is travelling further.

If the cue ball, or objective ball is next to a cushion, the Make Percentage is reduced in the calculation because the difficult positioning makes the shot more technically difficult for the player.

In this example, factors taken into account in the calculation are:
- distance between the cue ball and the objective ball;
- distance between the objective ball and the pocket;
- angle of incidence of the objective ball to the pocket;
- the difference between the angle of a path from the cue ball to the objective ball and from the objective ball to the center of the pocket

For simplicity, the path of the cue ball, C, and objective balls O1, O2, O3 are shown as dotted lines with arrows marking direction and the available shot paths labelled A1...A4.

For example, available shot A1 for objective ball O1 takes the cue ball C along shot path A1a to strike O1 which then follows path A1b into pocket P2. It will be appreciated that the angle of incidence of the ball to the pocket dictates a margin or error as to the direction of A1b. However, by splitting this into the two factors, distance of the path can be considered separately to angle. The available shot A1 for O1 is likely to be scored as an easy shot because O1 is close to the pocket P2 at an angle of incidence such that a direct shot by the cue ball or even a more glancing shot should result in O1 being pocketed.

Available shot A2 (A2a->A2b) for objective ball O2 is harder while objective shots A3 (A3a->A3b) and A4 (A4a->A4b) for objective ball O3 are harder still.

Individual and total example difficulty values calculated may be:

| Available Shot | Distance to object ball | Distance to pocket | Angle to object ball | Angle to pocket | Total Score |
|---|---|---|---|---|---|
| A1 | 0.7 | 0.95 | 0.8 | 0.85 | 0.45 |
| A2 | 0.9 | 0.8 | 0.6 | 0. 7 | 0.3 |
| A3 | 0.4 | 0.7 | 0.4 | 0.25 | 0.03 |
| A4 | 0.3 | 0.6 | 0.3 | 0.2 | 0.01 |

In this example, the scores represent the probability of success by a player. It will be appreciated that other score mechanisms could be used.

The angle scores may also take into account whether a direct or glancing strike from the cue ball to the objective ball is needed and also the likelihood of the cue ball following the objective ball into the pocket (although such factors could be included in other scores or scored separately)

It will be appreciated that there are more available (ball/pocket) shot combinations from the example shown in Figure 2. These would be calculated and taken into account, but for simplicity of this explanation are not shown. The system may optionally include a threshold past which available shots are not scored for difficulty - for example, if the available shot requires to be bounced off multiple table edges or is a result of multiple other objective balls first striking each other.

The difficulty score enable the difficulty of available shots to be compared. Therefore the scale of values used does not matter, simply that the values are comparable relative to each other.

In one example, distances may be measured in absolute units. In another example, distances are measured relative to table length or width.

In this embodiment, the calculation is arithmetic. Each factor is scored (preferably as a probability as shown) and these are then combined. In the case of a probability, the factors are multiplied together so as to arrive at the overall probability of making the shot.

In another embodiment, the calculation may be via, or at least in part via, a lookup table. In such an example, length of shot may be divided into bands and each band assigned a difficulty score. The lookup table is then consulted for each factor, the difficulty scores retrieved and added together to determine the overall difficulty score.

In another embodiment, the system includes or is connected to a machine learning system having a predictive model trained on training data from shots taken against available shots. The training data includes the geometrical measurements and outcome of the shot, and the predictive model is configured to determine the difficulty score for the shot.

Preferably, the data processing system is configured to provide the geometrical measurements and outcome of shots to the machine learning system to train the predictive model on real-time data.

It will be appreciated that the overall calculation may use combinations of approaches such as calculation and lookup table or lookup table and machine learning model, or all three (or more) approaches combined.

Preferably, the probability or score is relative to an average player, although as explained below, the actual players' skill may be assessed (for example via analysis of their actions recorded in the video data stream) during play and used to moderate the difficulty score, for example by applying a weighting. Other implementations may also be considered, for example the skill may be used to pick which set of lookup tables are used to calculate difficulty score, or it may change the factors used in the calculation, the machine learning model applied and/or how the factors and models are combined to calculate the difficulty score.

It will be appreciated that there may be more than one available shot for a cueball-objective ball combination, such as O3 in Figure 2. In one embodiment, each available shot may have a difficulty score calculated. In addition to geometrical measurements, other factors may be considered. For example, bouncing the cue ball off a table edge before hitting an objective ball requires higher skill than a direct shot and may be scored at a higher difficulty.

As explained above, the example of Figure 2 is simplified for ease of illustration. Embodiments may use various additional factors. In order to assess the degree of difficulty of available shots, the calculation takes into account geometrical and optionally other factors (before the shot has been taken). Example factors may include:
- The distance between the cue ball and the objective ball
- The proximity of the cue ball to the cushion and the angle that the cue ball will be leaving the cushion
- The distance between the objective ball and the pocket
- The required contact angle of the cue ball and objective ball
- The angle between the object ball and the pocket
- The size of the pocket available to accept the object ball (middle pockets are less forgiving if the angle is significantly less than 90 degrees)
- How hard the ball needs to be struck to get to the pocket
- Whether hazards or bonuses are already in the path, and how easy they are to hit
- How many points will be achieved if the shot is successful
- Whether the cue ball is in danger of going into a pocket
- Whether the objective ball bounces off a cushion before it goes into a pocket (double / bank)
- Whether the objective ball is hitting another ball into a pocket (plant / combination)
- Whether more than one objective ball is being potted in the same shot
- proximity of cue or objective ball to a cushion
- whether there is another ball is partially or fully obscuring the path between the objective ball and the pocket or between the cue ball and the objective ball or in the line it would be expected the player to line up the cue on the cue ball

Modifiers can be applied depending on the game ball state. For example, if an objective ball for an available shot is on or within a predetermined distance of the cushion, the make percentage may be reduced by a predetermined factor such as by 50%. Similarly, if a potting angle is acute (i.e. it is a fine cut and you need to hit less than 25% of the object ball to pot it) and the percentage may be reduced by a predetermined factor such as by 40%. In another example, the proportion of the hole available to receive the ball may be determined and the percentage for the shot reduced by a factor dependent on that proportion - for example, if only 30% of the hole is available to receive the ball because of where the object ball is on the table in relation to the hole, this in one embodiment may reduce the make percentage by 70%.

As discussed above, the factors selected may be based on the assessed skill of the player(s), the rules of the game played, or they may be selectable or pre-set system parameters.

Once the difficulty score has been calculated, it then describes the available shot and can optionally be recorded in the data repository 45. The data processing system 40 can take into account the respective available shot scores to decide which available shots to incentivize or penalize. In some games, the objective balls themselves may have different scoring values - in such games, the score that would be achieved from potting the ball for the available shot may also taken into account when determining whether to incentivize or penalize the shot by projecting bonuses or hazards onto the playing surface in the way of the shot (or suggest a path that could be taken for a shot so as to make an easy shot more challenging).

Depending on the state of play, and optionally the player's ability (discussed below), the hazards (penalties) and bonuses (incentives) are selected and corresponding virtual play pieces positioned strategically by the data processing system and then projected onto the table in their positions by the projector. The number of points available to be lost/gained by virtual play pieces will vary and the quantity and size of the virtual play pieces may also vary. The virtual play pieces can also be made to move in a path by the projector, which adds to the fun and the challenge.

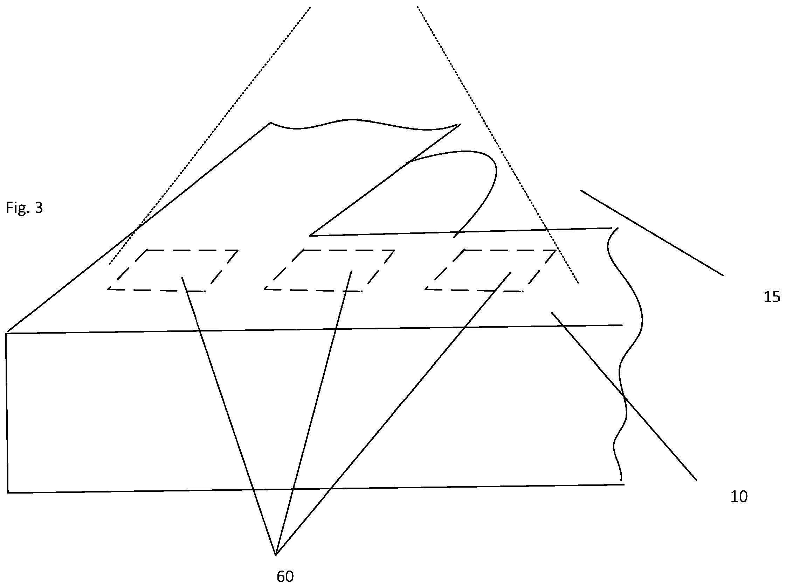

In one embodiment, illustrated in Figure 3, Lifelines or Power Ups 60 can be provided by the game system may be which can be selected by the player to give them, for example, additional time to play the shot, be given additional shots or 'Ball in Hand' which allows the player to move the cue ball to any position on the table they wish. In one embodiment, these may be presented to the user as virtual buttons or other user interface controls by the projector projecting them on to the side of the table or another area. In this embodiment, the selection of a lifeline may be detected by the camera monitoring the activity around the projected user interface and the data processing system identifying the presence of a user's finger(s), hand or other deliberate object or motion over the projected user interface option.

The quantity, and type of Lifeline available to each player can also vary, depending on the skill level of each player. For example, a proficient player will never be allowed to move the white to wherever they want to, and a beginner may be allowed to do this for every shot. The nature of the Lifelines / Power Ups and Bonuses / Hazards may change depending on the game being played. Preferably, the game system provides a suite of various games, with different objectives and rules.

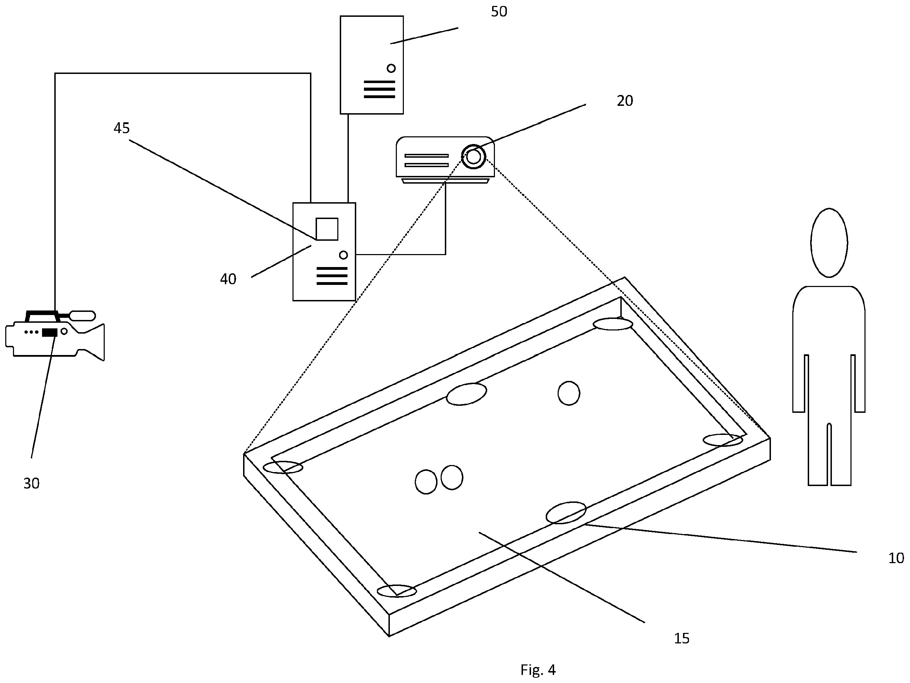

In a preferred embodiment shown in Figure 4, the cue sports game system includes a player analysis system 50.

In this embodiment, the data processing system 40 is configured to provide the video data stream and/or data derived from it to the player analysis system 50 and the player analysis system 50 determines a player weighting from the provided data. The weighting is then used by the data processing system 40 to modify the difficulty score of an available shot (or the incentives/penalties selected). As a result, for the same table state two players of different skill (and therefore weighting) may be provided different virtual play objects that influence their shot choice and possible score.

Preferably, the player analysis system 50 includes a predictive machine learning model trained in real time from the provided data.

When a player takes a shot, the chosen shot and the outcome of the shot is preferably assessed by the player analysis system 50, which also takes into account the difficulty score that was previously calculated for the shot and determines a skill weighting for the player. This is repeated for every shot taken for each player, and the skill weighting is adjusted accordingly, preferably in substantially real time.

In order to assess the skill level of the actual shot taken, various factors may be identified by the player analysis system 50 from the video data stream, shot outcome and difficulty score. These factors may include (or be selected from):
- If a ball is potted, what was the degree of difficulty compared to the other shots available?
- Was the object ball the highest value ball available?
- If the object ball is not potted, how close was it to being potted in the selected pocket?
- How long did it take to make the shot (thinking time and execution time)
- What evasive action did the player take to ensure the white did not enter a pocket (side spin, topspin, bottom spin etc.)
- Was this spin required and effective?
- Did the player deliberately leave a difficult or easy shot for the next player?
- Was the shot a seemingly random hit that would make no sense to a skilled player?
- If a ball was potted, was it a fluke with little or no skill required?
- If the white is potted, was it just bad luck or lack of skill?
- Was a lifeline selected that was appropriate for the attempted shot?

Optionally, the camera system and video data stream may be configured to capture player stance, position and activity when at the table. This data can then be taken into account when assessing player skill in preferred embodiments.

In this embodiment, the camera system 30 is configured to capture a video data stream of play activity of a player playing at the table and communicate the video data stream to the data processing system. The activity preferably includes one or more of stance, striking action, target selection, outcome of the action. The activity is then analyzed with other factors to determine a skill weighting as described above.

Optionally, the projector 20 may be configured to project, onto the playing surface, one or more game elements modifying play of the cue sports game, the one or more game elements being determined in dependence on the skill rating for the player.

For example, the game elements may include a visual hint, guide or target to aid the player select or make a shot or an obstacle to be avoided (either on-table or in the form of a table pocket not to be used or subject to reduced or negative scoring).

In this embodiment, a player may optionally be guided through the game by visual prompts projected onto the playing surface or table edge from the data processing system and projector.

In this embodiment, the skills of the player can be evaluated and the game be adapted for that player to dynamically handicap or aid the player and balance the game. By taking into account aspects such as stance and play over time, "noise" such as lucky shots can be suppressed from impacting the skill rating.

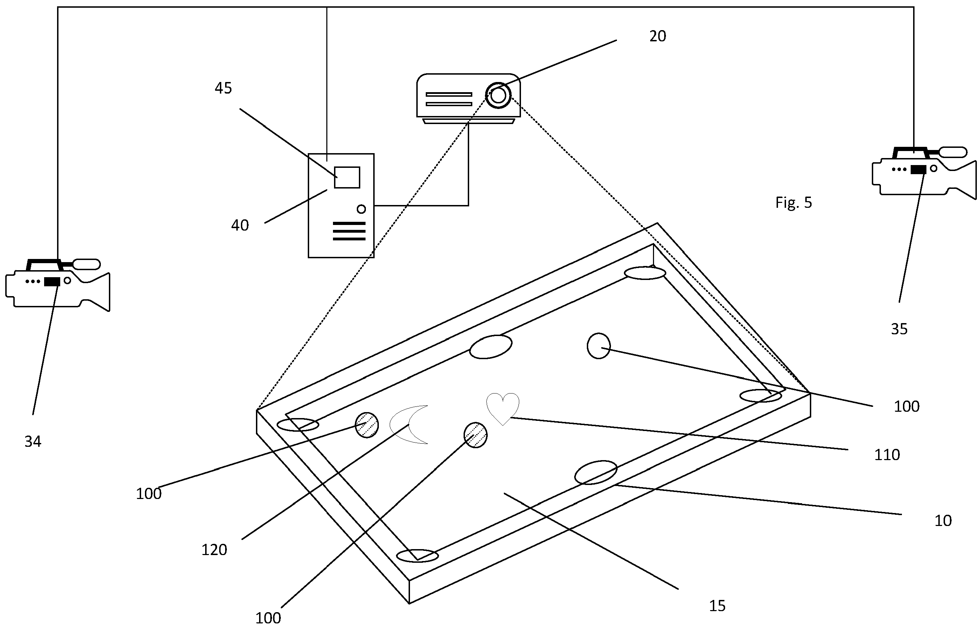

In a preferred embodiment shown in Figure 5, the camera system includes a plurality of cameras 34, 35 having overlapping field of view of the playing surface, each camera being configured to capture a video data stream of play activity at the table and communicate the video data stream to the data processing system. The data processing system in this embodiment is configured to correlate the video data streams from the cameras and identify, from the correlated video data streams, identity and positioning of each of the game balls 100 (in this example the cue ball is shown without hatching and the objective balls are hatched) over time.

In another embodiment, there may be a primary and a secondary camera. The primary camera may be used for position and other geometrical measurements such as angle (and depending on position relative to the play surface these may be subject to correction via a geometrical transform to account for skew etc.). The secondary camera may be used to confirm identity (particularly when a ball is obscured or partially obscured to the primary camera and may also optionally be used to confirm geometrical measurements made from the data stream of the primary camera.

Preferably, players take turns. This may be scheduled/prompted by the game system. Preferably, the system includes a display screen showing the current active player and the scores of the players in the game, provided by the data processing system. The data processing system is preferably configured to generate a score for the active player in dependence on positioning of the game balls during their turn and on a scoring criteria for the cue sports game.

As well as the physical game balls 100, the system is configured to display, using the projector 20, one or more virtual play pieces 110, 120 on the playing surface during play. The virtual play pieces 110, 120 modify scoring for the active player. Preferably, the virtual play pieces are player-dependent as described in the above embodiment and when the active player switches (instructed by the system by the display or similar), so too do the virtual play pieces and/or their position and/or size and/or number. In a typical game, each player takes a turn and makes a single shot, hitting the cue ball with the cue and attempting to pot one or more of the other objective balls (generally, potting the cue ball results in a negative (or possibly a zero) score for that turn and the cue ball being returned to a starting position/zone for the next player).

In one embodiment, making a shot that passes the cue ball or other objective ball over a virtual play piece 110 that corresponds to an incentive (and has an appearance selected by the data processing system 40 to reflect that) is detected by the data processing system from the video data stream of the shot and results in the player being given a bonus score, for example an increase to their score or a multiplier to the score from the current shot. In another embodiment, the data processing system detecting the passing of the cue ball or other objective ball over a virtual play piece 120 that corresponds to a penalty (and has an appearance selected to reflect that) gives the player a penalty, for example a deduction to their score or cancellation of any scoring from that shot.

The virtual play pieces 110, 120 may have different designs (banana skins, hoops to pass through, coins etc.) and may also be animated by the projector as a ball passes over their position (or after the shot - for example they might be simulated to explode, a flower might bloom etc.).

In preferred embodiments, the data processing system determines passage of a ball over a virtual play piece by the path of the ball on the playing surface 15 and data on the location of the virtual play piece. As the data processing system determined location of the virtual play piece when selecting what to place where, it is able to determine passage of a ball over that position without needing to cross-reference the video data stream to "see" the ball passing over the virtual play object 110, 120.

It will be appreciated that virtual play objects could also be regions of the playing surface to be avoided or to end a shot with a ball within for a reward. Selected pockets or regions could be enabled or disabled in this manner, for example.

Each frame of the video data stream is preferably processed by the data processing system 40 to classify identity and position of each ball 100 at that frame. The data processing system 40 maintains a data repository 45 in which a history of the game is recorded. In a preferred embodiment, the data processing system 40 records, in the data repository, each frame of the video data stream and also identifies and records differences in ball positions at that frame compared to the previous frame. Preferably, an identifier for the active player for each frame is also recorded in the data repository 45. At the end of an active player's turn, the data processing system 40 preferably compiles the differences in ball positions to produce a path for the cue ball and also an end position (including in-pocket) for each other ball. Scoring is updated for any balls that have been pocketed during the active player's turn. Additionally, the path for the cue ball is compared to positions of any virtual play pieces displayed for the active player and the data processing system updates scoring according to value or modifier of any virtual play pieces traversed by the cue ball path.

At the end of a player's turn, the system may optionally display significant sequences of frames (that resulted in scoring for example) and/or generate a video simulating the shot from the records in the data repository 45.

Scoring may be communicated to players via the projector and/or it may be displayed on one or more displays surrounding the table.

Preferably, the data processing system 40 monitors the data repository and differences in ball positions to identify foul actions (a ball moving without being hit by the cue or another ball, a ball being removed from the play surface etc.). The data processing system 40 may use the projector 20 to mark the position of the relevant ball(s) prior to the foul and prompt the player to revert the balls to those positions before continuing. As highlighted below, there may be game options allowing what would otherwise be foul actions and when these are active this operation of the data processing system 40 is suppressed.

Preferably, the data processing system 40 is configured to modify the number, scoring value and position of the virtual play pieces 110, 120 for the active player in dependence on their score. In one embodiment, the modification is determined in dependence on score of the active player over a predetermined time period. In another embodiment, the modification is determined relative to the score of other players.

In one embodiment, the data processing system 40 is configured to generate a scoring difficulty value. In this embodiment, the data processing system 40 generates a shot difficulty value and potential score for each shot available to the active player. The scoring difficulty is calculated from the shot difficulty value and the score achievable from potting the ball. The scoring difficulty value is then used to select one or more virtual play pieces, preferably based on difference in score of the player to other players, to modify one or more of the available shots. For example, a player that is a lot behind others on scoring may cause the system to select one or more easy to moderate scoring difficulty value shots and adding a bonus virtual play piece in the path of each. In another example, a player that is a little behind others on scoring be given a bonus virtual play piece in the path of a higher difficulty value shot that also should result in a ball being potted (if the player takes the risk and succeeds). In another example, a player that is well ahead of others on scoring may be given multiple penalty virtual play pieces, each in the path of easy or medium difficulty value shots, encouraging the player to try more risky shots or risk being penalized (and allow others to catch up).

In these embodiments, the data processing system 40 modifies the game as it goes on to take into account skill and luck so that the game challenges them and makes them feel that a win is achievable. Should the player be given too much assistance, or make lucky shots, the application and modification of virtual playing pieces as the game progresses keeps the game balanced.

Scoring may be communicated to players via the projector and/or it may be displayed on one or more displays surrounding the table.

In selected embodiments, the game system may offer a weaker player a number of advantages (for example, not exhaustive):
- Show the player which shot to play
- **Show how** to play the shot
- Award additional bonus points
- Award additional lifelines
- Give the player more time to play the shot
- Allow the player additional shots
- Allow the player to move the white ball to an easier position of their choice

In such embodiments, the game system may also be able to make the game harder for an expert by doing the opposite of the above, plus the system can turn some pockets into hazards, project additional hazards onto the table, ensure that the player is often facing a difficult shot by highlighting which ball to go for, making the player hit the ball off a cushion before it goes into the pocket etc, etc.

The ability to project 'objects' onto the table, and for the system to know which ball touches which 'object' opens up a world of possibilities that can make the games more fun, interesting etc

When capturing play activity, the system may automatically ascertain one or more of the following:
- Is the ball being struck proficiently? (A combination of some or all of the following):
   ∘ Efficient acceleration of the cue
   ∘ Straight cue delivery
   ∘ Cue 'follow through'
   ∘ Appropriate speed of shot
- Spin rate, direction of spin
- Is the spin imparted intentionally or unintentionally? (ability to manoeuvre the white ball in a logical / successful way)
- Accuracy of shot (if they miss, was it a difficult shot and were they close?)
- Shot selection ability (did they select the 'right' shot?)
- Is the player improving or getting worse
- Success / failure rate / average points scored per go
- How closely do they follow the correct lines drawn on table?

By ascertaining the above, this will enable the processing system to determine and assign a handicap rating to each player immediately after their first shot. This handicap rating is in turn interpreted during play of the selected game so as to modify predetermined aspects of game play in dependence on the handicap rating (and/or difference between that player's rating and that of the other player(s)) while that player is playing. Optionally, this handicap can be refined with each subsequent shot. In one embodiment, a learning phase may be operated over a predetermined time period or number of shots in which the system monitors the player and determines a rating (handicap).

The handicap rating will enable players of different ability to compete on a level playing field.

Preferably, the system uses a machine learning system such as a classifier which receives the video and/or data determined from the video as inputs and classifies them against a model determined from a training dataset to assign a handicap to each player on a, say, 5 level scale. For example, the comparison could be made with a top rated professional, who will be assigned a level of 5. Level 1 will be a complete novice. Each handicap level will potentially offer an advantage or combination of advantages to each individual player.

Example:
- Player A is assigned Level 4 and is offered
   o more time to play the shot
- Player B is assigned Level 2 and is offered
   ∘ more time to play the shot
   ∘ shown which shot to play
   ∘ shown how to play the shot
- Player C is assigned Level 1 and is offered
   ∘ more time to play the shot
   ∘ shown which shot to play
   ∘ shown how to play the shot
   ∘ awarded additional lifelines
   ∘ allowed to move the white ball into an easier position

In the above embodiments, the game assumed to be played substantially corresponds to conventional pool in which a cue ball is used to pot numbered objective balls (and the score corresponds to the number of the objective ball). In those embodiments, the data processing system determines an available shot and the difficulty score assuming that the objective is to pot numbered objective balls and not the cue ball. However, it will be appreciated that some games will not have the same objective, so the assessment by the data processing system will change accordingly. For example, the objective might be to not pot anything, so the criteria to calculate the shots available will be different but based on a similar principle. In one embodiment, a rule set is stored in a memory accessible to the data processing system and is retrieved at the start of a game and used to configure how the data processing system operates the game turns, virtual game objects and scoring. It will also be appreciated the playing surfaces in some games may have different numbers of positions of pockets. In some embodiments pockets may be replaced with scoring zones or similar.

It will be appreciated that the data repository may take various forms including a central or distributed file store, database (such as SQL or other relational or non-relational database types). It may be implemented using storage devices such as hard disks, random access memories, solid state disks or any other forms of storage media. It will also be appreciated that the data processing system discussed herein may represent a computing system with a single processor or a collection of processors acting in a synchronised, semi-synchronised or asynchronous manner. The data processing system may be local to the game table, remote or distributed. For example, a master server system may maintain the game system and be responsible for the machine learning and other aspects whilst a local PC or other computing device may be the "processor" responsible for processing the video data stream to avoid network timing lag. Alternatively, the central system may be responsible for processing decisions and local device acts as dumb input/output devices.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features.

Although illustrated embodiments of the present invention have been described, it should be understood that various changes, substitutions, and alterations can be made by one of ordinary skill in the art without departing from the present invention which is defined by the recitations in the claims below.

## Claims

1. A cue sports game system comprising a table (10) having a playing surface (15) and a plurality of pockets (16), a projector (20), a camera system (30) and a data processing system (40), the camera system being positioned to have a field of view of the playing surface and of play activity of a cue sports game with a plurality of game balls on the playing surface (15) and the projector (20) being positioned overhead of the playing surface (15) to project imagery onto the playing surface (15), the plurality of game balls including a cue ball and a plurality of objective balls,
the camera system (30) configured to capture a video data stream of play activity at the table and communicate the video data stream to the data processing system (40);
the data processing system (40) being configured to identify, from the video data stream, identity and positioning of each of the game balls on the playing surface (15) over time, the data processing system (40) being further configured to:
determine available shots from the identity and positioning of the game balls, an available shot comprising the cue ball hitting one of the objective balls and causing the respective objective ball to enter one of the pockets (16);
for each available shot, determine a plurality of geometrical measurements on relative position of the cue ball, the respective objective ball and the pocket and calculate a difficulty score from the geometrical measurements;
in at least one or more predetermined phases of the game, select, in dependence on the respective difficulty score, one or more of the available shots to be penalized or incentivized and cause the projector to project a penalty or incentive virtual play object onto the playing surface in a path of the cue ball or the objective ball;
determine, after a shot, from the video data stream, identity and positioning of the game balls, a score for the shot in dependence on the position of the game balls and in dependence on the cue ball or an objective ball passing over or into a virtual play object during the shot.

2. The cue sports game system of claim 1, further including a data repository (45), the data processing system (40) being configured to maintain, in the data repository (45), a player turn schedule for shots and an overall score for each player dependent on the score for each shot taken in their respective turn.

3. The cue sports game system of claim 2, wherein the data processing system (40) is configured to determine a differential of overall score of the player having the turn relative to overall score of the other players and select the one or more of the available shots to be penalized or incentivized dependent on the differential.

4. The cue sports system of claim 3, wherein the data processing system (40) is configured to vary a number available of shots to be incentivized or penalized based on the differential.

5. The cue sports system of claim 3 or 4, wherein the data processing system (40) is configured, based on the differential, to vary a position of virtual play objects to thereby vary achievability of incurring the penalty or incentive.

6. The cue sports game system of any preceding claim, further comprising a machine learning system having a predictive model trained on training data from shots taken against available shots, the training data including the geometrical measurements and outcome of the shot, wherein the predictive model is configured to determine the difficulty score for the shot, the data processing system being configured to communicate the geometrical measurements of each available shot to the machine learning system and to obtain the difficulty score therefrom.

7. The cue sports game system of claim 6, wherein the data processing system (40) is configured to provide the geometrical measurements and outcome of shots to the machine learning system to train the predictive model on real-time data.

8. The cue sports game system of any preceding claim, further comprising a player analysis system (50), wherein the data processing system (40) is configured to provide the video data stream and/or data derived therefrom to the player analysis system (50), the player analysis system being configured to determine a player weighting from the provided data, wherein the data processing system (40) is configured to modify the difficulty score of an available shot in dependence on the player weighting.

9. The cue sports game system of claim 8, wherein the player analysis system (50) includes a predictive machine learning model trained in real time from the provided data.

10. The cue sports game system of any preceding claim, further comprising a lookup table stored in a memory, the lookup table dividing each geometrical measurement into a number of bands of values for the geometrical measurement, the lookup table mapping each band to a difficulty value, the data processing system (40) being configured to classify each geometrical measurement according to its respective band and obtain its respective difficulty value, the data processing system being further configured to calculate the difficulty score for the available shot by summing the difficulty value for each geometrical measurement of the available shot.

11. The cue sports system of any preceding claim, wherein the data processing system (40) is configured to calculate the difficulty score from an arithmetic calculation, arithmetic calculation including parameters comprising, or being derived from, the geometrical measurements.

12. The cue sports system of any preceding claim, the camera system (30) comprising a plurality of cameras having overlapping fields of view of the playing surface, the data processing system being configured to determine positioning of the game balls from the video data streams of the cameras using predetermined data on the cameras and their position relative to the playing surface (15).

13. A computer implemented method for a cue sports game system, the cue sports game system comprising a table (10) having a playing surface (15) and a plurality of pockets (16), a projector (20), a camera system (30) and a data processing system (40), the camera system (30) being positioned to have a field of view of the playing surface (15) and of play activity of a cue sports game with a plurality of game balls on the playing surface (15) and the projector (20) being positioned overhead of the playing surface to project imagery onto the playing surface (15), the plurality of game balls including a cue ball and a plurality of objective balls, the camera system (30) configured to capture a video data stream of play activity at the table and communicate the video data stream to the data processing system (40), wherein the computer implemented method comprising:
identifying, by the data processing system (40), from the video data stream, identity and positioning of each of the game balls on the playing surface (15) over time;
determining available shots from the identity and positioning of the game balls, an available shot comprising the cue ball hitting one of the objective balls and causing the respective objective ball to enter one of the pockets (16);
for each available shot, determining a plurality of geometrical measurements on relative position of the cue ball, the respective objective ball and the pocket and calculate a difficulty score from the geometrical measurements;
in at least one or more predetermined phases of the game, selecting, in dependence on the respective difficulty score, one or more of the available shots to be penalized or incentivized and cause the projector (20) to project a penalty or incentive virtual play object onto the playing surface in a path of the cue ball or the objective ball; and,
determining, after a shot, from the video data stream, identity and positioning of the game balls, a score for the shot in dependence on the position of the game balls and in dependence on the cue ball or an objective ball passing over or into a virtual play object during the shot.

14. The computer implemented method of claim 13, further comprising maintaining, in a data repository (45), a player turn schedule for shots and an overall score for each player dependent on the score for each shot taken in their respective turn.

15. The computer implemented method of claim 14, further comprising determining a differential of overall score of the player having the turn relative to overall score of the other players and selecting the one or more of the available shots to be penalized or incentivized dependent on the differential.

16. The computer implemented method of claim 15, further comprising varying a number available of shots to be incentivized or penalized based on the differential.

17. The computer implemented method of claim 15 or 16, further comprising varying, based on the differential, a position of virtual play objects to thereby vary achievability of incurring the penalty or incentive.

18. The computer implemented method of any of claims 13 to 17, further comprising communicating with a machine learning system having a predictive model trained on training data from shots taken against available shots, the training data including the geometrical measurements and outcome of the shot, wherein the predictive model is configured to determine at least a part of the difficulty score for the shot, the communicating including communicating the geometrical measurements of each available shot to the machine learning system and to obtain the difficulty score therefrom.

19. The computer implemented method of claim 18, further comprising providing the geometrical measurements and outcome of shots to the machine learning system to train the predictive model on real-time data.

20. The computer implemented method of any of claims 13 to 19, further comprising providing the video data stream and/or data derived therefrom to a player analysis system (50), the player analysis system determining a player weighting from the provided data, the computer implemented method further comprising modifying the difficulty score of an available shot in dependence on the player weighting.

21. The computer implemented method of claim 20, wherein the player analysis system (50) includes a predictive machine learning model, the computer implemented method further comprising training the model of the player analysis system in real time from the provided data.

22. The computer implemented method of any of claims 13 to 21, further comprising storing a lookup table in a memory, the lookup table dividing each geometrical measurement into a number of bands of values for the geometrical measurement, the lookup table mapping each band to a difficulty value, the computer implemented method further comprising classifying at least selected ones of the each geometrical measurement according to its respective band and obtain its respective difficulty value, and calculating at least a part of the difficulty score for the available shot by summing the difficulty value for each geometrical measurement of the available shot.

23. The computer implemented method of any of claims 13 to 22, further comprising calculating at least a part of the difficulty score from an arithmetic calculation, arithmetic calculation including parameters comprising, or being derived from, the geometrical measurements.

24. A cue sports game system comprising a table (10) having a playing surface (15) and a plurality of pockets (16), a projector (20), a camera system (30) and a data processing system (40), the camera system (30) being positioned to have a field of view of the playing surface and of play activity of a cue sports game with a plurality of game balls on the playing surface (15) and the projector (20) being positioned overhead of the playing surface to project imagery onto the playing surface (15),
the camera system (30) configured to capture a video data stream of play activity at the table and communicate the video data stream to the data processing system (40);
the data processing system (40) being configured to identify, from the video data streams, identity and positioning of each of the game balls on the playing surface over time, the data processing system (40) being further configured to:
determine available shots from the identity and positioning of the game balls, an available shot comprising the cue striking one of the game balls resulting in a valid scoring shot, the valid scoring shot being defined in dependence on a rule set for the game, the rule set being stored in a memory accessible to the data repository;
for each available shot, determine a plurality of geometrical measurements on relative position of the game ball to be struck by the cue and one or more of the other game balls or features of playing surface that result in the valid scoring shot and calculate a difficulty score from the geometrical measurements;
in at least one or more predetermined phases of the game, select, in dependence on the respective difficulty score, one or more of the available shots to be penalized or incentivized and cause the projector (20) to project a penalty or incentive virtual play object onto the playing surface in a path of the available shot;
determine, after a shot, from the video data stream, identity and positioning of the game balls, a score for the shot in dependence on the position of the game balls, the rule set for the game and one or more of the game balls passing over or into the virtual play object during the shot.

25. The cue sports game system of claim 24, wherein the plurality of game balls including a cue ball and a plurality of objective balls, an available shot comprising the cue ball hitting one of the objective balls and causing the respective objective ball to enter one of the pockets, wherein the data processing system is configured for each available shot, to determine a plurality of geometrical measurements on relative position of the cue ball, the respective objective ball and the pocket and calculate the difficulty score from the geometrical measurements.

26. A game system comprising a table (10) having a playing surface (15), a projector (20), a camera system (30) and a data processing system (40), the camera system (30) being positioned to have a field of view of the playing surface (15) and of play activity of a game with a plurality of game balls on the playing surface and the projector (20) being positioned overhead of the playing surface to project imagery onto the playing surface (15),
the camera system (30) configured to capture a video data stream of play activity at the table and communicate the video data stream to the data processing system (40);
the data processing system (40) including a memory encoding rules of the game according to valid and invalid play activity with respect to the plurality of game balls, the data processing system (40) being configured to identify, from the video data stream, identity and positioning of each of the game balls on the playing surface over time, the data processing system being further configured to:
determine available shots from the identity and positioning of the game balls, an available shot comprising a shot that can be validly made according to the rules of the game;
for each available shot, determine a plurality of geometrical measurements on relative position of the ball or balls comprising the available shot and calculate a difficulty score from the geometrical measurements;
select, in dependence on the respective difficulty score, one or more of the available shots to be penalized or incentivized and cause the projector (20) to project a penalty or incentive virtual play object onto the playing surface in a path of the available shot;
determine, after a shot, from the video data stream, identity and positioning of the game balls, a score for the shot in dependence on the position of the game balls and in dependence on one of the game balls passing over or into a virtual play object during the shot.

## Patentansprüche

1. Billardsportspielsystem, aufweisend einen Tisch (10) mit einer Spielfläche (15) und einer Vielzahl von Taschen (16), einen Projektor (20), ein Kamerasystem (30) und ein Datenverarbeitungssystem (40), wobei das Kamerasystem so positioniert ist, dass es ein Sichtfeld der Spielfläche und der Spielaktivität eines Billardsportspiels mit einer Vielzahl von Spielbällen auf der Spielfläche (15) aufweist, und der Projektor (20) über der Spielfläche (15) positioniert ist, um Bilder auf die Spielfläche (15) zu projizieren, wobei die Vielzahl von Spielbällen einen Billardball und eine Vielzahl von Objektbällen beinhaltet,
wobei das Kamerasystem (30) so konfiguriert ist, dass es einen Videodatenstrom der Spielaktivität am Tisch erfasst und den Videodatenstrom an das Datenverarbeitungssystem (40) übermittelt;
wobei das Datenverarbeitungssystem (40) so konfiguriert ist, dass es aus dem Videodatenstrom die Identität und Positionierung jedes der Spielbälle auf der Spielfläche (15) im Laufe der Zeit identifiziert, wobei das Datenverarbeitungssystem (40) ferner konfiguriert ist zum:
Bestimmen verfügbarer Schüsse aus der Identität und Positionierung der Spielbälle, wobei ein verfügbarer Schuss aufweist, dass der Billardball auf einen der Objektbälle trifft und bewirkt, dass der jeweilige Objektball in eine der Taschen (16) eintritt;
für jeden verfügbaren Schuss, Bestimmen einer Vielzahl von geometrischen Messungen der relativen Position des Billardballs, des jeweiligen Objektballs und der Tasche und Berechnen einer Schwierigkeitsbewertung aus den geometrischen Messungen;
in mindestens einer oder mehreren vorbestimmten Phasen des Spiels, Auswählen, in Abhängigkeit von der jeweiligen Schwierigkeitsbewertung, eines oder mehrerer der verfügbaren Schüsse, die bestraft oder erzielt werden sollen, und Bewirken, dass der Projektor ein virtuelles Straf- oder Zielspielobjekt auf die Spielfläche in einem Pfad des Billardballs oder des Objektballs projiziert;
Bestimmen, nach einem Schuss, aus dem Videodatenstrom, der Identität und Positionierung der Spielbälle, einer Bewertung für den Schuss in Abhängigkeit von der Position der Spielbälle und in Abhängigkeit davon, dass der Billardball oder ein Objektball während des Schusses über oder in ein virtuelles Spielobjekt läuft.

2. Billardsportspielsystem nach Anspruch 1, ferner beinhaltend einen Datenspeicher (45), wobei das Datenverarbeitungssystem (40) so konfiguriert ist, dass es in dem Datenspeicher (45) einen Spieler-Zug-Plan für Schüsse und eine Gesamtbewertung für jeden Spieler in Abhängigkeit von der Bewertung für jeden in seinem jeweiligen Zug aufgenommenen Schuss verwaltet.

3. Billardsportspielsystem nach Anspruch 2, wobei das Datenverarbeitungssystem (40) so konfiguriert ist, dass es eine Differenz der Gesamtbewertung des Spielers mit dem Zug relativ zur Gesamtbewertung der anderen Spieler bestimmt und den einen oder die mehreren der verfügbaren Schüsse, die bestraft oder erzielt werden sollen, in Abhängigkeit von der Differenz auswählt.

4. Billardsportsystem nach Anspruch 3, wobei das Datenverarbeitungssystem (40) so konfiguriert ist, dass es eine verfügbare Anzahl von Schüssen, die erzielt oder bestraft werden sollen, basierend auf der Differenz variiert.

5. Billardsportsystem nach Anspruch 3 oder 4, wobei das Datenverarbeitungssystem (40) so konfiguriert ist, dass es basierend auf der Differenz eine Position virtueller Spielobjekte variiert, um dadurch die Erreichbarkeit der Bestrafung oder des Zieles zu variieren.

6. Billardsportspielsystem nach einem der vorhergehenden Ansprüche, ferner aufweisend ein maschinelles Lernsystem mit einem prädiktiven Modell, das auf Trainingsdaten von Schüssen trainiert ist, die gegen verfügbare Schüsse aufgenommen wurden, wobei die Trainingsdaten die geometrischen Messungen und das Ergebnis des Schusses beinhalten, wobei das prädiktive Modell so konfiguriert ist, dass es die Schwierigkeitsbewertung für den Schuss bestimmt, wobei das Datenverarbeitungssystem so konfiguriert ist, dass es die geometrischen Messungen jedes verfügbaren Schusses an das maschinelle Lernsystem übermittelt und daraus die Schwierigkeitsbewertung erhält.

7. Billardsportspielsystem nach Anspruch 6, wobei das Datenverarbeitungssystem (40) so konfiguriert ist, dass es die geometrischen Messungen und das Ergebnis von Schüssen an das maschinelle Lernsystem liefert, um das prädiktive Modell auf Echtzeitdaten zu trainieren.

8. Billardsportspielsystem nach einem der vorhergehenden Ansprüche, ferner aufweisend ein Spieleranalysesystem (50), wobei das Datenverarbeitungssystem (40) so konfiguriert ist, dass es den Videodatenstrom und/oder daraus abgeleitete Daten an das Spieleranalysesystem (50) liefert, wobei das Spieleranalysesystem so konfiguriert ist, dass es eine Spielergewichtung aus den gelieferten Daten bestimmt, wobei das Datenverarbeitungssystem (40) so konfiguriert ist, dass es die Schwierigkeitsbewertung eines verfügbaren Schusses in Abhängigkeit von der Spielergewichtung modifiziert.

9. Billardsportspielsystem nach Anspruch 8, wobei das Spieleranalysesystem (50) ein prädiktives maschinelles Lernmodell beinhaltet, das in Echtzeit aus den gelieferten Daten trainiert wurde.

10. Billardsportspielsystem nach einem der vorhergehenden Ansprüche, ferner aufweisend eine in einem Speicher gespeicherte Nachschlagetabelle, wobei die Nachschlagetabelle jede geometrische Messung in eine Anzahl von Wertebändern für die geometrische Messung unterteilt, wobei die Nachschlagetabelle jedes Band auf einen Schwierigkeitswert abbildet, wobei das Datenverarbeitungssystem (40) so konfiguriert ist, dass es jede geometrische Messung gemäß ihrem jeweiligen Band klassifiziert und ihren jeweiligen Schwierigkeitswert erhält, wobei das Datenverarbeitungssystem ferner so konfiguriert ist, dass es die Schwierigkeitsbewertung für den verfügbaren Schuss durch Summieren des Schwierigkeitswerts für jede geometrische Messung des verfügbaren Schusses berechnet.

11. Billardsportsystem nach einem der vorhergehenden Ansprüche, wobei das Datenverarbeitungssystem (40) so konfiguriert ist, dass es die Schwierigkeitsbewertung aus einer arithmetischen Berechnung berechnet, wobei die arithmetische Berechnung Parameter beinhaltet, die die geometrischen Messungen aufweisen oder von diesen abgeleitet sind.

12. Billardsportsystem nach einem der vorhergehenden Ansprüche, wobei das Kamerasystem (30) eine Vielzahl von Kameras mit überlappenden Sichtfeldern der Spielfläche aufweist, wobei das Datenverarbeitungssystem so konfiguriert ist, dass es die Positionierung der Spielbälle aus den Videodatenströmen der Kameras unter Verwendung vorbestimmter Daten auf den Kameras und ihrer Position relativ zur Spielfläche (15) bestimmt.

13. Computerimplementiertes Verfahren für ein Billardsportspielsystem, wobei das Billardsportspielsystem einen Tisch (10) mit einer Spielfläche (15) und einer Vielzahl von Taschen (16), einen Projektor (20), ein Kamerasystem (30) und ein Datenverarbeitungssystem (40) aufweist, wobei das Kamerasystem (30) so positioniert ist, dass es ein Sichtfeld der Spielfläche (15) und der Spielaktivität eines Billardsportspiels mit einer Vielzahl von Spielbällen auf der Spielfläche (15) aufweist, und der Projektor (20) über der Spielfläche positioniert ist, um Bilder auf die Spielfläche (15) zu projizieren, wobei die Vielzahl von Spielbällen einen Billardball und eine Vielzahl von Objektbällen beinhaltet, wobei das Kamerasystem (30) so konfiguriert ist, dass es einen Videodatenstrom der Spielaktivität am Tisch erfasst und den Videodatenstrom an das Datenverarbeitungssystem (40) übermittelt, wobei das computerimplementierte Verfahren aufweist:
Identifizieren, durch das Datenverarbeitungssystem (40), aus dem Videodatenstrom, der Identität und Positionierung jedes der Spielbälle auf der Spielfläche (15) im Laufe der Zeit;
Bestimmen verfügbarer Schüsse aus der Identität und Positionierung der Spielbälle, wobei ein verfügbarer Schuss aufweist, dass der Billardball auf einen der Objektbälle trifft und bewirkt, dass der jeweilige Objektball in eine der Taschen (16) eintritt;
für jeden verfügbaren Schuss, Bestimmen einer Vielzahl von geometrischen Messungen der relativen Position des Billardballs, des jeweiligen Objektballs und der Tasche und Berechnen einer Schwierigkeitsbewertung aus den geometrischen Messungen;
in mindestens einer oder mehreren vorbestimmten Phasen des Spiels, Auswählen, in Abhängigkeit von der jeweiligen Schwierigkeitsbewertung, eines oder mehrerer der verfügbaren Schüsse, die bestraft oder erzielt werden sollen, und Bewirken, dass der Projektor (20) ein virtuelles Straf- oder Zielspielobjekt auf die Spielfläche in einem Pfad des Billardballs oder des Objektballs projiziert; und,
Bestimmen, nach einem Schuss, aus dem Videodatenstrom, der Identität und Positionierung der Spielbälle, einer Bewertung für den Schuss in Abhängigkeit von der Position der Spielbälle und in Abhängigkeit davon, dass der Billardball oder ein Objektball während des Schusses über oder in ein virtuelles Spielobjekt läuft.

14. Computerimplementiertes Verfahren nach Anspruch 13, ferner aufweisend ein Verwalten, in einem Datenspeicher (45), eines Spieler-Zug-Plans für Schüsse und einer Gesamtbewertung für jeden Spieler in Abhängigkeit von der Bewertung für jeden in seinem jeweiligen Zug aufgenommenen Schuss.

15. Computerimplementiertes Verfahren nach Anspruch 14, ferner aufweisend ein Bestimmen einer Differenz der Gesamtbewertung des Spielers mit dem Zug relativ zur Gesamtbewertung der anderen Spieler und ein Auswählen des einen oder der mehreren der verfügbaren Schüsse, die bestraft oder erzielt werden sollen, in Abhängigkeit von der Differenz.

16. Computerimplementiertes Verfahren nach Anspruch 15, ferner aufweisend ein Variieren einer verfügbaren Anzahl von Schüssen, die erzielt oder bestraft werden sollen, basierend auf der Differenz.

17. Computerimplementiertes Verfahren nach Anspruch 15 oder 16, ferner aufweisend ein Variieren, basierend auf der Differenz, einer Position virtueller Spielobjekte, um dadurch die Erreichbarkeit der Bestrafung oder des Zieles zu variieren.

18. Computerimplementiertes Verfahren nach einem der Ansprüche 13 bis 17, ferner aufweisend ein Kommunizieren mit einem maschinellen Lernsystem mit einem prädiktiven Modell, das auf Trainingsdaten von Schüssen trainiert ist, die gegen verfügbare Schüsse aufgenommen wurden, wobei die Trainingsdaten die geometrischen Messungen und das Ergebnis des Schusses beinhalten, wobei das prädiktive Modell so konfiguriert ist, dass es mindestens einen Teil der Schwierigkeitsbewertung für den Schuss bestimmt, wobei das Kommunizieren das Übermitteln der geometrischen Messungen jedes verfügbaren Schusses an das maschinelle Lernsystem und das Erhalten der Schwierigkeitsbewertung daraus beinhaltet.

19. Computerimplementiertes Verfahren nach Anspruch 18, ferner aufweisend ein Liefern der geometrischen Messungen und des Ergebnisses von Schüssen an das maschinelle Lernsystem, um das prädiktive Modell auf Echtzeitdaten zu trainieren.

20. Computerimplementiertes Verfahren nach einem der Ansprüche 13 bis 19, ferner aufweisend ein Liefern des Videodatenstroms und/oder daraus abgeleiteter Daten an ein Spieleranalysesystem (50), wobei das Spieleranalysesystem eine Spielergewichtung aus den gelieferten Daten bestimmt, wobei das computerimplementierte Verfahren ferner ein Modifizieren der Schwierigkeitsbewertung eines verfügbaren Schusses in Abhängigkeit von der Spielergewichtung aufweist.

21. Computerimplementiertes Verfahren nach Anspruch 20, wobei das Spieleranalysesystem (50) ein prädiktives maschinelles Lernmodell beinhaltet, wobei das computerimplementierte Verfahren ferner das Trainieren des Modells des Spieleranalysesystems in Echtzeit aus den gelieferten Daten aufweist.

22. Computerimplementiertes Verfahren nach einem der Ansprüche 13 bis 21, ferner aufweisend ein Speichern einer Nachschlagetabelle in einem Speicher, wobei die Nachschlagetabelle jede geometrische Messung in eine Anzahl von Wertebändern für die geometrische Messung unterteilt, wobei die Nachschlagetabelle jedes Band auf einen Schwierigkeitswert abbildet, wobei das computerimplementierte Verfahren ferner das Klassifizieren mindestens ausgewählter jeder geometrischen Messung gemäß ihrem jeweiligen Band und das Erhalten ihres jeweiligen Schwierigkeitswerts und das Berechnen mindestens eines Teils der Schwierigkeitsbewertung für den verfügbaren Schuss durch Summieren des Schwierigkeitswerts für jede geometrische Messung des verfügbaren Schusses aufweist.

23. Computerimplementiertes Verfahren nach einem der Ansprüche 13 bis 22, ferner aufweisend ein Berechnen mindestens eines Teils der Schwierigkeitsbewertung aus einer arithmetischen Berechnung, wobei die arithmetische Berechnung Parameter beinhaltet, die die geometrischen Messungen aufweisen oder von diesen abgeleitet sind.

24. Billardsportspielsystem, aufweisend einen Tisch (10) mit einer Spielfläche (15) und einer Vielzahl von Taschen (16), einen Projektor (20), ein Kamerasystem (30) und ein Datenverarbeitungssystem (40), wobei das Kamerasystem (30) so positioniert ist, dass es ein Sichtfeld der Spielfläche und der Spielaktivität eines Billardsportspiels mit einer Vielzahl von Spielbällen auf der Spielfläche (15) aufweist, und der Projektor (20) über der Spielfläche positioniert ist, um Bilder auf die Spielfläche (15) zu projizieren, wobei das Kamerasystem (30) so konfiguriert ist, dass es einen Videodatenstrom der Spielaktivität am Tisch erfasst und den Videodatenstrom an das Datenverarbeitungssystem (40) übermittelt;
wobei das Datenverarbeitungssystem (40) so konfiguriert ist, dass es aus den Videodatenströmen die Identität und Positionierung jedes der Spielbälle auf der Spielfläche im Laufe der Zeit identifiziert, wobei das Datenverarbeitungssystem (40) ferner konfiguriert ist zum:
Bestimmen verfügbarer Schüsse aus der Identität und Positionierung der Spielbälle, wobei ein verfügbarer Schuss aufweist, dass der Queue auf einen der Spielbälle trifft, was zu einem gültigen Bewertungsschuss führt, wobei der gültige Bewertungsschuss in Abhängigkeit von einem Regelsatz für das Spiel definiert ist, wobei der Regelsatz in einem Speicher gespeichert ist, auf den der Datenspeicher zugreifen kann;
für jeden verfügbaren Schuss, Bestimmen einer Vielzahl von geometrischen Messungen der relativen Position des Spielballs, den der Queue treffen soll, und eines oder mehrerer der anderen Spielbälle oder Merkmale der Spielfläche, die zu dem gültigen Bewertungsschuss führen, und Berechnen einer Schwierigkeitsbewertung aus den geometrischen Messungen;
in mindestens einer oder mehreren vorbestimmten Phasen des Spiels, Auswählen, in Abhängigkeit von der jeweiligen Schwierigkeitsbewertung, eines oder mehrerer der verfügbaren Schüsse, die bestraft oder erzielt werden sollen, und Bewirken, dass der Projektor (20) ein virtuelles Straf- oder Zielspielobjekt auf die Spielfläche in einem Pfad des verfügbaren Schusses projiziert;
Bestimmen, nach einem Schuss, aus dem Videodatenstrom, der Identität und
Positionierung der Spielbälle, einer Bewertung für den Schuss in Abhängigkeit von der Position der Spielbälle, dem Regelsatz für das Spiel und einem oder mehreren der Spielbälle, die während des Schusses über oder in das virtuelle Spielobjekt laufen.

25. Billardsportspielsystem nach Anspruch 24, wobei die Vielzahl von Spielbällen einen Billardball und eine Vielzahl von Objektbällen beinhaltet, wobei ein verfügbarer Schuss aufweist, dass der Billardball auf einen der Objektbälle trifft und bewirkt, dass der jeweilige Objektball in eine der Taschen eintritt, wobei das Datenverarbeitungssystem so konfiguriert ist, dass es für jeden verfügbaren Schuss eine Vielzahl von geometrischen Messungen der relativen Position des Billardballs, des jeweiligen Objektballs und der Tasche bestimmt und die Schwierigkeitsbewertung aus den geometrischen Messungen berechnet.

26. Spielsystem, aufweisend einen Tisch (10) mit einer Spielfläche (15), einen Projektor (20), ein Kamerasystem (30) und ein Datenverarbeitungssystem (40), wobei das Kamerasystem (30) so positioniert ist, dass es ein Sichtfeld der Spielfläche (15) und der Spielaktivität eines Spiels mit einer Vielzahl von Spielbällen auf der Spielfläche aufweist, und der Projektor (20) über der Spielfläche positioniert ist, um Bilder auf die Spielfläche (15) zu projizieren,
wobei das Kamerasystem (30) so konfiguriert ist, dass es einen Videodatenstrom der Spielaktivität am Tisch erfasst und den Videodatenstrom an das Datenverarbeitungssystem (40) übermittelt;
wobei das Datenverarbeitungssystem (40) einen Speicher beinhaltet, der Regeln des Spiels gemäß gültiger und ungültiger Spielaktivität in Bezug auf die Vielzahl von Spielbällen codiert, wobei das Datenverarbeitungssystem (40) so konfiguriert ist, dass es aus dem Videodatenstrom die Identität und Positionierung jedes der Spielbälle auf der Spielfläche im Laufe der Zeit identifiziert, wobei das Datenverarbeitungssystem ferner konfiguriert ist zum:
Bestimmen verfügbarer Schüsse aus der Identität und Positionierung der Spielbälle, wobei ein verfügbarer Schuss einen Schuss aufweist, der gemäß den Regeln des Spiels gültig gemacht werden kann;
für jeden verfügbaren Schuss, Bestimmen einer Vielzahl von geometrischen Messungen der relativen Position des Balls oder der Bälle, die den verfügbaren Schuss aufweisen, und Berechnen einer Schwierigkeitsbewertung aus den geometrischen Messungen;
Auswählen, in Abhängigkeit von der jeweiligen Schwierigkeitsbewertung, eines oder mehrerer der verfügbaren Schüsse, die bestraft oder erzielt werden sollen, und Bewirken, dass der Projektor (20) ein virtuelles Straf- oder Zielspielobjekt auf die Spielfläche in einem Pfad des verfügbaren Schusses projiziert;
Bestimmen, nach einem Schuss, aus dem Videodatenstrom, der Identität und Positionierung der Spielbälle, einer Bewertung für den Schuss in Abhängigkeit von der Position der Spielbälle und in Abhängigkeit davon, dass einer der Spielbälle während des Schusses über oder in ein virtuelles Spielobjekt läuft.

## Revendications

1. - Système de jeu de billard comprenant une table (10) ayant une surface de jeu (15) et une pluralité de poches (16), un projecteur (20), un système de caméras (30) et un système de traitement de données (40), le système de caméras étant positionné pour avoir un champ de vision de la surface de jeu et d'activité de jeu d'un jeu de billard avec une pluralité de billes de jeu sur la surface de jeu (15), et le projecteur (20) étant positionné au-dessus de la surface de jeu (15) pour projeter des images sur la surface de jeu (15), la pluralité de boules de jeu comprenant une bille de choc et une pluralité de billes objets,
le système de caméras (30) étant configuré pour capturer un flux de données vidéo d'activité de jeu au niveau de la table et communiquer le flux de données vidéo au système de traitement de données (40) ;
le système de traitement de données (40) étant configuré pour identifier, à partir du flux de données vidéo, l'identité et le positionnement de chacune des billes de jeu sur la surface de jeu (15) au cours du temps, le système de traitement de données (40) étant en outre configuré pour :
déterminer des tirs disponibles à partir de l'identité et du positionnement des billes de jeu, un coup disponible comprenant la bille de choc frappant l'une des billes objets et amenant la bille objet respective à entrer dans l'une des poches (16) ;
pour chaque tir disponible, déterminer une pluralité de mesures géométriques sur la position relative de la bille de choc, de la bille objet respective et de la poche et calculer un score de difficulté à partir des mesures géométriques ;
dans au moins une ou plusieurs phases prédéterminées du jeu, sélectionner, en fonction du score de difficulté respectif, un ou plusieurs des tirs disponibles devant être pénalisés ou récompensés, et amener le projecteur à projeter un objet de jeu virtuel de pénalité ou de récompense sur la surface de jeu, dans un trajet de la bille de choc ou de la bille objet ;
déterminer, après un tir, à partir du flux de données vidéo, l'identité et le positionnement des billes de jeu, un score pour le tir en fonction de la position des billes de jeu et en fonction de la bille de choc ou d'une bille objet passant sur ou dans un objet de jeu virtuel pendant le tir.

2. - Système de jeu de billard selon la revendication 1, comprenant en outre un référentiel de données (45), le système de traitement de données (40) étant configuré pour conserver, dans le référentiel de données (45), un ordre des tours des joueurs pour les tirs et un score global pour chaque joueur en fonction du score pour chaque tir effectué lors de leur tour respectif.

3. - Système de jeu de billard selon la revendication 2, dans lequel le système de traitement de données (40) est configuré pour déterminer une différence entre le score global du joueur dont c'est le tour et le score global des autres joueurs et sélectionner un ou plusieurs des tirs disponibles devant être pénalisés ou récompensés en fonction de la différence.

4. - Système de jeu de billard selon la revendication 3, dans lequel le système de traitement de données (40) est configuré pour faire varier un nombre de tirs disponibles à récompenser ou à pénaliser en fonction de la différence.

5. - Système de jeu de billard selon la revendication 3 ou 4, dans lequel le système de traitement de données (40) est configuré, en fonction de la différence, pour faire varier une position d'objets de jeu virtuels afin de faire varier ainsi la probabilité de se voir infliger la pénalité ou de bénéficier de la récompense.

6. - Système de jeu de billard selon l'une quelconque des revendications précédentes, comprenant en outre un système d'apprentissage automatique ayant un modèle prédictif entraîné sur des données d'entraînement issues de tirs effectués par rapport aux tirs disponibles, les données d'entraînement comprenant les mesures géométriques et le résultat du tir, le modèle prédictif étant configuré pour déterminer le score de difficulté pour le tir, le système de traitement de données étant configuré pour communiquer les mesures géométriques de chaque tir disponible au système d'apprentissage automatique et pour obtenir le score de difficulté à partir de celui-ci.

7. - Système de jeu de billard selon la revendication 6, dans lequel le système de traitement de données (40) est configuré pour fournir les mesures géométriques et le résultat des tirs au système d'apprentissage automatique afin d'entraîner le modèle prédictif sur des données en temps réel.

8. - Système de jeu de billard selon l'une quelconque des revendications précédentes, comprenant en outre un système d'analyse des joueurs (50), le système de traitement de données (40) étant configuré pour fournir le flux de données vidéo et/ou les données qui en découlent au système d'analyse des joueurs (50), le système d'analyse des joueurs étant configuré pour déterminer une pondération des joueurs à partir des données fournies, le système de traitement des données (40) étant configuré pour modifier le score de difficulté d'un tir disponible en fonction de la pondération des joueurs.

9. - Système de jeu de billard selon la revendication 8, dans lequel le système d'analyse des joueurs (50) comprend un modèle prédictif d'apprentissage automatique entraîné en temps réel à partir des données fournies.

10. - Système de jeu de billard selon l'une quelconque des revendications précédentes, comprenant en outre une table de correspondance stockée dans une mémoire, la table de correspondance divisant chaque mesure géométrique en un nombre de plages de valeurs pour la mesure géométrique, la table de correspondance attribuant chaque plage à une valeur de difficulté, le système de traitement de données (40) étant configuré pour classer chaque mesure géométrique en fonction de sa plage respective et obtenir sa valeur de difficulté respective, le système de traitement de données étant en outre configuré pour calculer le score de difficulté pour le tir disponible en additionnant les valeurs de difficulté pour chaque mesure géométrique du tir disponible.

11. - Système de jeu de billard selon l'une quelconque des revendications précédentes, dans lequel le système de traitement de données (40) est configuré pour calculer le score de difficulté à partir d'un calcul arithmétique, le calcul arithmétique incluant des paramètres comprenant les mesures géométriques ou étant issus de celles-ci.

12. - Système de jeu de billard selon l'une quelconque des revendications précédentes, le système de caméras (30) comprenant une pluralité de caméras ayant des champs de vision chevauchant de la surface de jeu, le système de traitement de données étant configuré pour déterminer le positionnement des billes de jeu à partir des flux de données vidéo des caméras en utilisant des données prédéterminées sur les caméras et leur position par rapport à la surface de jeu (15).

13. - Procédé mis en œuvre par ordinateur pour un système de jeu de billard, le système de jeu de billard comprenant une table (10) ayant une surface de jeu (15) et une pluralité de poches (16), un projecteur (20), un système de caméras (30) et un système de traitement de données (40), le système de caméras (30) étant positionné de manière à avoir un champ de vision de la surface de jeu (15) et d'activité de jeu d'un jeu de billard avec une pluralité de billes de jeu sur la surface de jeu (15), et le projecteur (20) étant positionné au-dessus de la surface de jeu pour projeter des images sur la surface de jeu (15), la pluralité de billes de jeu comprenant une bille de choc et une pluralité de billes visées, le système de caméras (30) étant configuré pour capturer un flux de données vidéo d'activité de jeu au niveau de la table et communiquer le flux de données vidéo au système de traitement de données (40), le procédé mis en œuvre par ordinateur comprenant :
identifier, par le système de traitement de données (40), à partir du flux de données vidéo, l'identité et le positionnement de chacune des billes de jeu sur la surface de jeu (15) au cours du temps ;
déterminer des tirs disponibles à partir de l'identité et du positionnement des billes de jeu, un tir disponible comprenant la bille de choc frappant l'une des billes objets et amener la bille visée respective à entrer dans l'une des poches (16) ;
pour chaque tir disponible, déterminer une pluralité de mesures géométriques sur la position relative de la bille de choc, de la bille visée respective et de la poche et calculer un score de difficulté à partir desdites mesures géométriques ;
dans au moins une ou plusieurs phases prédéterminées du jeu, sélectionner, en fonction du score de difficulté respectif, un ou plusieurs des tirs disponibles devant être pénalisés ou récompensés, et amener le projecteur (20) à projeter un objet de jeu virtuel de pénalité ou de récompense sur la surface de jeu dans un trajet de la bille de choc ou de la bille objet ; et
déterminer, après un tir, à partir du flux de données vidéo, l'identité et le positionnement des billes de jeu, un score pour le tir en fonction de la position des billes de jeu et en fonction de la bille de choc ou d'une bille objet passant ou dans un objet de jeu virtuel pendant le tir.

14. - Procédé mis en œuvre par ordinateur selon la revendication 13, comprenant en outre : conserver, dans un référentiel de données (45), un ordre des tours des joueurs pour les tirs et un score global pour chaque joueur en fonction du score pour chaque tir effectué lors de leur tour respectif.

15. - Procédé mis en œuvre par ordinateur selon la revendication 14, comprenant en outre : déterminer une différence entre le score global du joueur dont c'est le tour et le score global des autres joueurs et sélectionner un ou de plusieurs des tirs disponibles devant être pénalisés ou récompensés en fonction de la différence.

16. - Procédé mis en œuvre par ordinateur selon la revendication 15, comprenant en outre : faire varier un nombre de tirs disponibles à récompenser ou à pénaliser en fonction la différence.

17. - Procédé mis en œuvre par ordinateur selon la revendication 15 ou 16, comprenant en outre : faire varier, en fonction de la différence, une position d'objets de jeu virtuels afin de faire varier ainsi la probabilité de se voir infliger la pénalité ou de bénéficier de la récompense.

18. - Procédé mis en œuvre par ordinateur selon l'une quelconque des revendications 13 à 17, comprenant en outre : communiquer avec un système d'apprentissage automatique ayant un modèle prédictif entraîné sur des données d'entraînement issues de tirs effectués par rapport aux tirs disponibles, les données d'entraînement comprenant les mesures géométriques et le résultat du tir, le modèle prédictif étant configuré pour déterminer au moins une partie du score de difficulté pour le tir, la communication comprenant la communication des mesures géométriques de chaque tir disponible au système d'apprentissage automatique et l'obtention, du score de difficulté à partir de celui-ci.

19. - Procédé mis en œuvre par ordinateur selon la revendication 18, comprenant en outre : fournir les mesures géométriques et le résultat des tirs au système d'apprentissage automatique afin d'entraîner le modèle prédictif sur des données en temps réel.

20. - Procédé mis en œuvre par ordinateur selon l'une quelconque des revendications 13 à 19, comprenant en outre : fournir le flux de données vidéo et/ou les données qui en découlent à un système d'analyse des joueurs (50), le système d'analyse des joueurs déterminant une pondération des joueurs à partir des données fournies, le procédé mis en œuvre par ordinateur comprenant en outre : modifier le score de difficulté d'un tir disponible en fonction de la pondération des joueurs.

21. - Procédé mis en œuvre par ordinateur selon la revendication 20, dans lequel le système d'analyse des joueurs (50) comprend un modèle prédictif d'apprentissage automatique, le procédé mis en œuvre par ordinateur comprenant en outre : entraîner le modèle du système d'analyse des joueurs en temps réel à partir des données fournies.

22. - Procédé mis en œuvre par ordinateur selon l'une quelconque des revendications 13 à 21, comprenant en outre : stocker une table de correspondance dans une mémoire, la table de correspondance divisant chaque mesure géométrique en un nombre de plages de valeurs pour la mesure géométrique, la table de correspondance attribuant chaque plage à une valeur de difficulté, le procédé mis en œuvre par ordinateur comprenant en outre : classer au moins des mesures géométriques sélectionnées parmi lesdites mesures géométriques en fonction de leur plage respective et obtenir leurs valeurs de difficulté respectives, et calculer au moins une partie du score de difficulté pour le tir disponible en additionnant les valeurs de difficulté pour chaque mesure géométrique du tir disponible.

23. - Procédé mis en œuvre par ordinateur selon l'une quelconque des revendications 13 à 22, comprenant en outre : calculer au moins une partie du score de difficulté à partir d'un calcul arithmétique, le calcul arithmétique incluant des paramètres comprenant les mesures géométriques ou étant issus de celles-ci.

24. - Système de jeu de billard comprenant une table (10) ayant une surface de jeu (15) et une pluralité de poches (16), un projecteur (20), un système de caméras (30) et un système de traitement de données (40), le système de caméras (30) étant positionné de manière à avoir un champ de vision de la surface de jeu et d'activité de jeu d'un jeu de billard avec une pluralité de billes de jeu sur la surface de jeu (15), et le projecteur (20) étant positionné au-dessus de la surface de jeu pour projeter des images sur la surface de jeu (15),
le système de caméras (30) étant configuré pour capturer un flux de données vidéo d'activité de jeu au niveau de la table et communiquer le flux de données vidéo au système de traitement de données (40) ;
le système de traitement de données (40) étant configuré pour identifier, à partir des flux de données vidéo, l'identité et le positionnement de chacune des billes de jeu sur la surface de jeu au cours du temps, le système de traitement de données (40) étant en outre configuré pour :
déterminer des tirs disponibles à partir de l'identité et du positionnement des billes de jeu, un tir disponible comprenant la bille de choc frappant l'une des billes de jeu conduisant à un tir valide permettant de marquer le point, le tir valide permettant de marquer le point étant défini en fonction d'un ensemble de règles pour le jeu, l'ensemble de règles étant stocké dans une mémoire accessible au référentiel de données ;
pour chaque tir disponible, déterminer une pluralité de mesures géométriques sur la position relative de la bille de jeu devant être frappée par la bille de choc et d'une ou plusieurs des autres billes de jeu ou caractéristiques de surface de jeu qui conduisent au tir valide permettant de marquer le point, et calculer un score de difficulté à partir des mesures géométriques ;
dans au moins une ou plusieurs phases prédéterminées du jeu, sélectionner, en fonction du score de difficulté respectif, un ou plusieurs des tirs disponibles devant être pénalisés ou récompensés, et amener le projecteur (20) à projeter un objet de jeu virtuel de pénalité ou de récompense sur la surface de jeu dans une trajet du tir disponible ;
déterminer, après un tir, à partir du flux de données vidéo, l'identité et le positionnement des billes de jeu, un score pour le tir en fonction de la position des billes de jeu, de l'ensemble de règles pour le jeu et d'une ou plusieurs des billes de jeu passant sur ou dans l'objet de jeu virtuel pendant le tir.

25. - Système de jeu de billard selon la revendication 24, dans lequel la pluralité de billes de jeu comprend une bille de choc et une pluralité de billes objets, un tir disponible comprenant la bille de choc frappant l'une des billes objets et amenant la bille objet respective à entrer dans l'une des poches, le système de traitement de données étant configuré, pour chaque tir disponible, pour déterminer une pluralité de mesures géométriques sur la position relative de la bille de choc, de la bille objet respective et de la poche et calculer le score de difficulté à partir des mesures géométriques.

26. - Système de jeu comprenant une table (10) ayant une surface de jeu (15), un projecteur (20), un système de caméras (30) et un système de traitement de données (40), le système de caméras (30) étant positionné de manière à avoir un champ de vision de la surface de jeu (15) et d'activité de jeu d'un jeu avec une pluralité de billes de jeu sur la surface de jeu, et le projecteur (20) étant positionné au-dessus de la surface de jeu pour projeter des images sur la surface de jeu (15),
le système de caméras (30) étant configuré pour capturer un flux de données vidéo d'activité de jeu au niveau de la table et communiquer le flux de données vidéo au système de traitement de données (40) ;
le système de traitement de données (40) comprenant une mémoire codant des règles du jeu en fonction des actions de jeu valides et non valides concernant la pluralité de billes de jeu, le système de traitement de données (40) étant configuré pour identifier, à partir du flux de données vidéo, l'identité et le positionnement de chacune des billes de jeu sur la surface de jeu au cours du temps, le système de traitement de données étant en outre configuré pour :
déterminer des tirs disponibles à partir de l'identité et du positionnement des billes de jeu, un tir disponible comprenant un tir pouvant être effectué de façon valide selon les règles du jeu ;
pour chaque tir disponible, déterminer une pluralité de mesures géométriques sur la position relative de la ou des billes comprenant le tir disponible et calculer un score de difficulté à partir des mesures géométriques ;
sélectionner, en fonction du score de difficulté respectif, un ou plusieurs des tirs disponibles devant être pénalités ou récompensés et amener le projecteur à projeter un objet de jeu virtuel de pénalité ou de récompense sur la surface de jeu dans un trajet du tir disponible ;
déterminer, après un tir, à partir du flux de données vidéo, l'identité et le positionnement des billes de jeu, un score pour le tir en fonction de la position des billes de jeu et en fonction de l'une des billes de jeu passant sur ou dans un objet de jeu virtuel pendant le tir.
